# EUROPEAN PATENT SPECIFICATION

(11) **EP 3 597 494 B1**
(45) Date of publication and mention of the grant of the patent: **07.04.2021**
(21) Application number: 19186640.9
(22) Date of filing: 16.07.2019
(51) Int. Cl.: B60T 13/26

(54) **EMERGENCY BRAKE SYSTEM FOR HEAVY VEHICLE**
NOTBREMSSYSTEM FÜR SCHWERLASTKRAFTWAGEN
SYSTÈME DE FREINAGE DE SECOURS POUR VÉHICULE LOURD

(30) Priority: 16.07.2018 IT 201800007233
(43) Date of publication of application: 22.01.2020
(73) Proprietor: IVECO MAGIRUS AG, 89079 Ulm (DE)
(72) Inventor: LEOKA, Georg, 89075 Ulm (DE); BAUR, Franz, 88480 Achstetten (DE)
(74) Representative: Faraldi, Marco

(56) References cited:
- EP-A1- 1 464 555
- WO-A1-2008/078006
- DE-A1- 2 527 775
- DE-B- 1 268 000
- GB-A- 2 131 508

## Description

### TECHNICAL FIELD

The present invention relates to a braking system for a vehicle, more particularly to a pneumatic braking system of a heavy vehicle, such as a vehicle with multiple axles, at least two of them being front axles.

### PRIOR ART

Heavy vehicles can include several front and/or rear axles required by the high weight of the vehicle or of the carried load. According to recent regulations in the field of heavy vehicles, the vehicle must be able to brake within a preset distance based on the type of vehicle.

With traditional braking systems, i.e. rear braking systems, such braking distances could not be guaranteed. This was the reason for developing front braking circuits so that the braking torque, acting both at the front and at the rear, could brake the vehicle within the preset distance required by the regulations.

However, such front braking systems are expensive and bulky, above all due to the necessary emergency circuit required by the aforementioned recent regulations.

Known braking systems are disclosed in published documents WO2008078006 A1, EP1464555 A1, DE2527775 A, GB2131508 A or DE1268000 A

There is therefore a need to improve braking systems for heavy vehicles so that braking can be performed under normal and under emergency conditions in an optimized and inexpensive way.

The object of the present invention is to satisfy the requirements set forth above.

### SUMMARY OF THE INVENTION

The above object is achieved by means of a braking system as claimed in the attached claims.

### BRIEF DESCRIPTION OF THE DRAWINGS

For a better understanding of the present invention, a preferred embodiment is described below by way of non-limiting example and with reference to the attached drawings, in which:
Figure 1 shows a diagram of a circuit of a braking system according to the invention in a first operating step; and
Figure 2 shows the diagram of Figure 1 in a second operating step.

### DETAILED DESCRIPTION OF THE INVENTION

The accompanying figures show a braking system 1 for one of the front axles (not shown) of a group of front axles of a heavy vehicle (not shown), in particular, the second front axle of a truck or a lorry.

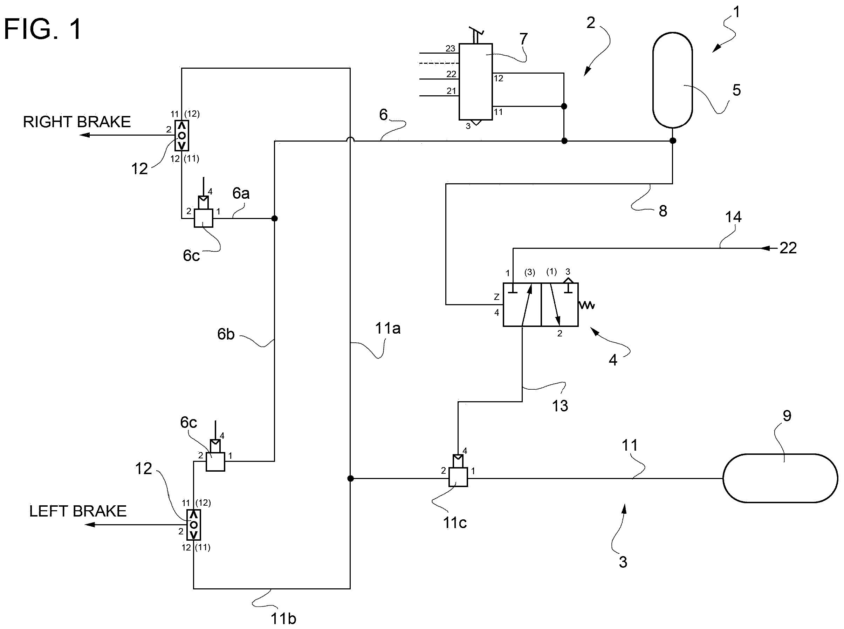

According to the invention, as shown in Figure 1, the braking system 1 essentially comprises a first portion 2 configured to allow the braking of the front axle under normal conditions and a second portion 3 configured to allow the braking under emergency conditions, fluidically connected together by a safety valve 4 as described in detail below.

In particular, the portion 2 comprises a first accumulator 5 of pressurized air fluidically connected by means of a duct 6 to braking means configured to brake the front axle to be braked. These braking means can be of any known type. In particular, the duct 6 branches into two branches 6a, 6b to introduce this pressurized air into the left and into the right braking means. The portion 1 can further comprise, for each of the branches 6a, 6b and fluidically interposed on them, a switching valve (also called relay valve) 6c, configured to distribute, as already known, the braking pressure both on the right and on the left side of the axle.

Along the duct 6, the portion 2 comprises a control unit 7 or "CBU" (Control Brake Unit), configured to regulate the passage of air from the accumulator 5 to the braking means through the duct 6 when requested by the user of the vehicle, for example by pressing a special pedal.

The first accumulator 5 is also fluidically connected to the safety valve 4 through a relative duct 8, preferably joining the duct 6 upstream of the control unit 7. The accumulator 5 is of a known type and is configured to be able to introduce air at a pressure between 8 and 10 bar, preferably 8 bar.

The second portion 3 comprises a second accumulator 9 fluidically connected to the front axle to be braked by a respective duct 11. Advantageously, the accumulator 9 is of a known type, is configured to be able to introduce air at a pressure between 8 and 10 bar, preferably 8 bar, and is part of the parking braking circuit of the vehicle.

In particular, the duct 11 branches off into two branches 11a, 11b to introduce this pressurized air into the left and right braking means. Advantageously, the two branches 11a, 11b are fluidically connected to the branches 6a, 6b of the duct 6, upstream of the braking means, through a respective valve 12, preferably a pressure selector valve (also known as shuttle valve) configured to allow pressurized air to go from the branch at the higher pressure among the branches 6a, 11a and 6b, 11b to the front axle of the vehicle.

Advantageously, the safety valve 4 is configured to detect a failure condition of the portion 2, e.g. a pressure drop in the duct 6 as described below, and consequently allow the connection of the portion 3 to the braking means of the front axle.

According to the described embodiment, the safety valve 4 is fluidically connected to the portion 2 through a duct 13, which fluidically connects the duct 11, upstream of the branch in the portions 11a, 11b, with the safety valve 4. In particular, this duct 13 can fluidically connect to the duct 11 through a switching valve 11c configured to allow the passage of pressurized air from the accumulator 9 to the front axle through the duct 11, when actuated. Advantageously, the actuation of this valve 11c can be carried out pneumatically by the pressure present in the duct 13.

The safety valve 4 can also be fluidically connected through a duct 14 to a braking circuit of the rear axle, for example an EBS (Electronic Brake System), or even better to a valve of such a system.

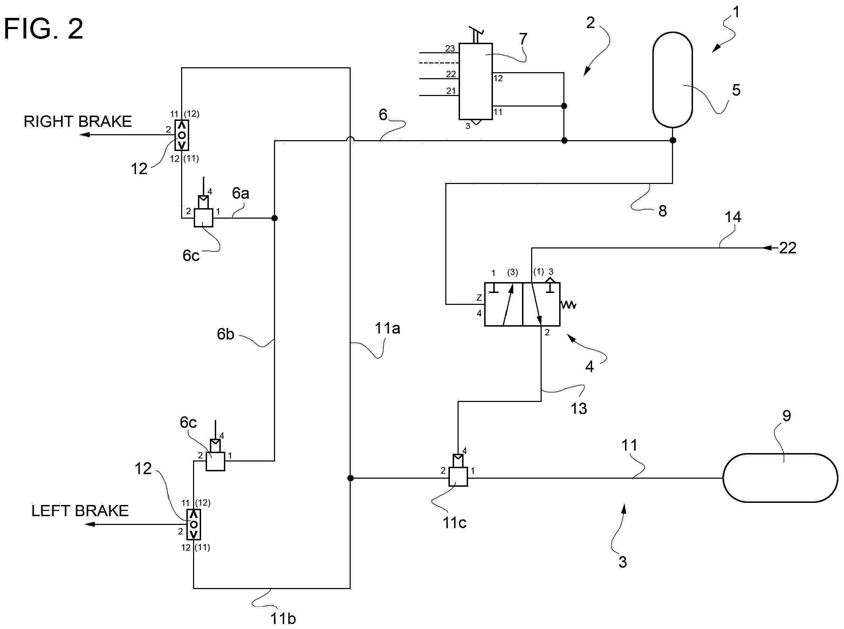

Advantageously, the safety valve 4 is a two-way, two-position valve configured not to allow the passage of an air flow under normal conditions (Figure 1) or to allow the passage of an air flow under failure conditions from the rear braking system to the portion 3 (Figure 2), when the pressure in the portion 2 (and therefore in the duct 8) falls below a preset threshold. For example, this preset threshold can be a pressure lower than 3 bar.

Preferably, the safety valve 4 is pneumatically controlled with respect to elastic reaction means by the pressure in the duct 8. When this pressure is higher than the preset value, the elastic force of the reaction means is overcome and therefore the valve 4 remains in the zero flow condition, whereas when this pressure is lower, the elastic force of the means moves the valve 4, thus allowing the flow from the rear braking system to the second portion 3. The operation of the braking system 1 according to the invention is as follows.

Under normal operating conditions (Figure 1), the pressure in the portion 2 is higher than the preset threshold, namely above 3 bar. Therefore, the valve 4 is arranged so that the pressurized air coming from the duct 14, namely from the rear braking circuit, does not pass into the portion 3. In this configuration then, as regulated by the control unit 7, the air from the accumulator 5 flows towards the right and the left braking means, passing through the duct 6 and the related switching valves 6c and selector valves 12.

Under failure conditions (Figure 2), the pressure in the portion 2 falls below the preset level, therefore below 3 bar, and the valve 4 switches, thus allowing the pressurized air from the rear circuit to flow towards the switching valve 11c, which allows the pressurized air in the tank 9 to flow through the duct 11 and the selector valves 12 towards the front right and left brakes of the second front axle.

In this way, even in the event of a failure in the front system, braking is allowed anteriorly and posteriorly through the signal coming from the rear axle. Then, braking at the rear, the user also automatically activates the braking of the second front axle.

From the foregoing, the advantages of a braking system 1 for heavy vehicles according to the invention are clear. Thanks to the safety valve 4 it is possible to pass from the portion 2 relating to the normal operation of the braking system 1 to the portion 3 relating to the emergency operation.

The use of pressure from the rear circuit, brought to the valve 4 through the duct 14, allows the front brakes to be controlled easily and practically even in the event of any failure of the portion 2.

The layout of the system according to the invention therefore satisfies the requirements of the regulations, while maintaining a minimum bulk and a reduced number of elements. Consequently, it is inexpensive and easy to assemble.

Finally, it is clear that modifications and variations may be made to the heavy vehicle braking system according to the present invention, which however do not depart from the scope of protection defined by the claims.

For example, the layout could be implemented differently from what described and the safety valve 4 could be manufactured differently from what described.

## Claims

1. A braking system (1) for supplying air to braking means of a heavy vehicle front axle, said system (1) comprising a first portion (2) provided with a first accumulator (1) for pressurised air fluidically connectable to said braking means through a first duct (6) and with a control unit (7) configured to adjust the fluidic communication between said first accumulator (1) and said braking means, said system further comprising a second portion (3) provided with a second accumulator (9) for pressurised air fluidically connectable through a second duct (11) to said braking means said braking system (1) comprising a safety valve (4) configured to fluidically connect said second accumulator (9) to said braking means once detected a failure in said first portion (2), **characterised in that** said valve (4) is a two-ways two-positions pneumatically controlled valve, wherein said pneumatic control is carried out by said first duct (6).

2. The system according to claim 1, wherein said failure is detected when the pressure of said first duct (6) drops below a preset value.

3. The system according to claim 1 or 2, wherein said preset pressure value is less than 3 bar.

4. The system according to any one of the preceding claims, wherein the second portion (3) comprises an on-off valve (11c) fluidically interposed on said second duct (11) and fluidically connected to said valve (4) and wherein said valve (4) is fluidically connected to a braking system of a rear axle of said vehicle through a third duct (14), when said pressure in said first portion (6) drops below said preset threshold, said valve (4) allows the flow of the pressurised fluid in said duct (14) in said on-off valve (11c) that in turn allows the fluidic connection between said second accumulator (9) and said braking means.

5. The system according to any one of the preceding claims, wherein said first and second ducts (6, 11) are fluidically connected to one another upstream of said braking means by means of respective selector valves (12).

6. The system according to any one of the preceding claims, wherein said second accumulator (9) is part of a parking braking circuit of said vehicle.

7. A heavy vehicle comprising at least a rear axle and at least a front axle, said rear axle comprising a pneumatic braking system, said vehicle comprising a braking system for one of said at least one front axle according to any one of the preceding claims.

## Patentansprüche

1. Bremssystem (1) zur Luftversorgung von Bremsmitteln einer Vorderachse eines Schwerlastfahrzeugs, welches System (1) einen ersten Teil (2) umfasst, der mit einem ersten Speicher (1) für Druckluft ausgestattet ist, der mit den Bremsmitteln durch eine erste Leitung (6) fluidverbindbar ist, und mit einer Steuereinheit (7), ausgebildet zur Einstellung der Fluidverbindung zwischen dem ersten Speicher (1) und den Bremsmitteln, welches System ferner einen zweiten Teil (3) mit einem zweiten Speicher (9) für Druckluft umfasst, der mit den Bremsmitteln durch eine zweite Leitung (11) fluidverbindbar ist, welches Bremssystem (1) ein Sicherheitsventil (4) umfasst, ausgebildet zur Fluidverbindung des zweiten Speichers (9) mit den Bremsmitteln, wenn eine Fehlfunktion im ersten Teil (2) detektiert wird, **dadurch gekennzeichnet, dass** das Ventil (4) ein pneumatisch gesteuertes Zwei-Wege-Zwei-Stellungs-Ventil ist, wobei die pneumatische Steuerung durch die erste Leitung (6) durchgeführt wird.

2. System gemäß Anspruch 1, bei welchem eine Fehlfunktion detektiert wird, wenn der Druck innerhalb der ersten Leitung (6) unter einen vorbestimmten Wert fällt.

3. System gemäß Anspruch 1 oder 2, wobei der vorbestimmte Druckwert kleiner ist als 3 bar.

4. System gemäß einem der vorhergehenden Ansprüche, bei welchem der zweite Teil (3) ein Ein-Aus-Ventil (11c) umfasst, das in der zweiten Leitung (11) zur Fluidverbindung zwischengeschaltet ist, wobei das Ventil (4) mit einem Bremssystem einer Hinterachse des Fahrzeugs durch eine dritte Leitung (14) fluidverbunden ist, wenn der Druck in dem ersten Teil (6) unter die vorbestimmte Schwelle fällt, welches Ventil (4) den Strom von Druckfluid in das Ein-Aus-Ventil (11c) zulässt, welches wiederum die Fluidverbindung zwischen dem zweiten Speicher (9) und den Bremsmitteln zulässt.

5. System gemäß einem der vorhergehenden Ansprüche, bei welchem die ersten und zweiten Leitungen (6, 11) stromaufwärts der Bremsmittel durch entsprechende Wahlventile (12) miteinander fluidverbunden sind.

6. System gemäß einem der vorhergehenden Ansprüche, bei welchem der zweite Speicher (9) Teil eines Feststellbremskreises des Fahrzeugs ist.

7. Schwerlastfahrzeug, umfassend zumindest eine Hinterachse und zumindest eine Vorderachse, wobei die Hinterachse ein pneumatisches Bremssystem umfasst, welches Fahrzeug ein Bremssystem für eine der zumindest einen Vorderachse(n) gemäß einem der vorhergehenden Ansprüche umfasst.

## Revendications

1. Système de freinage (1) pour alimenter de l'air sur un moyen de freinage d'un essieu avant de véhicule lourd, ledit système (1) comprenant une première section (2) qui est munie d'un premier accumulateur (1) pour l'air sous pression qui peut être connecté en termes de fluide audit moyen de freinage par l'intermédiaire d'un premier conduit (6), et d'une unité de commande (7) qui est configurée pour régler la communication fluidique entre ledit premier accumulateur (1) et ledit moyen de freinage, ledit système comprenant en outre une deuxième section (3) qui est munie d'un deuxième accumulateur (9) pour l'air sous pression qui peut être connecté en termes de fluide par l'intermédiaire d'un deuxième conduit (11) audit moyen de freinage, ledit système de freinage (1) comprenant une soupape de sécurité (4) qui est configurée pour connecter en termes de fluide ledit deuxième accumulateur (9) audit moyen de freinage une fois qu'une défaillance a été détectée dans ladite première section (2), **caractérisé en ce que** ladite soupape (4) est une soupape commandée pneumatiquement à deux voies et deux positions, dans lequel ladite commande pneumatique est mise en œuvre au moyen dudit premier conduit (6).

2. Système selon la revendication 1, dans lequel ladite défaillance est détectée lorsque la pression dudit premier conduit (6) chute en-deçà d'une valeur prédéfinie.

3. Système selon la revendication 1 ou 2, dans lequel ladite valeur de pression prédéfinie est inférieure à 3 bars.

4. Système selon l'une quelconque des revendications précédentes, dans lequel la deuxième section (3) comprend une soupape marche - arrêt (11c) qui est interposée en termes de fluide sur ledit deuxième conduit (11) et qui est connectée en termes de fluide à ladite soupape (4), et dans lequel ladite soupape (4) est connectée en termes de fluide à un système de freinage d'un essieu arrière dudit véhicule par l'intermédiaire d'un troisième conduit (14), lorsque ladite pression dans ladite première section (6) chute en-deçà dudit seuil prédéfini, ladite soupape (4) permet l'écoulement du fluide sous pression dans ledit troisième conduit (14) dans ladite soupape marche - arrêt (11c) qui, à son tour, permet la connexion fluidique entre ledit deuxième accumulateur (9) et ledit moyen de freinage.

5. Système selon l'une quelconque des revendications précédentes, dans lequel lesdits premier et deuxième conduits (6, 11) sont connectés en termes de fluide l'un à l'autre en amont dudit moyen de freinage au moyen de soupapes de sélection respectives (12).

6. Système selon l'une quelconque des revendications précédentes, dans lequel ledit deuxième accumulateur (9) est une partie d'un circuit de freinage de stationnement dudit véhicule.

7. Véhicule lourd comprenant au moins un essieu arrière et au moins un essieu avant, ledit essieu arrière comprenant un système de freinage pneumatique, ledit véhicule comprenant un système de freinage pour un essieu parmi ledit au moins un essieu avant selon l'une des revendications précédentes.
